Europäisches Patentamt

European Patent Office

Office européen des brevets

(19)

(11) Publication number: **0 488 036 A1**

# EUROPEAN PATENT APPLICATION

(12)

(21) Application number: **91119772.1**

(22) Date of filing: **19.11.91**

(51) Int. Cl.5: **G06F 13/24**

(30) Priority: **29.11.90 JP 333037/90**

(43) Date of publication of application:
**03.06.92 Bulletin 92/23**

(84) Designated Contracting States:
**DE FR GB NL**

(71) Applicant: **Kabushiki Kaisha Toshiba
72, Horikawa-cho Saiwai-ku
Kawasaki-shi(JP)**

(72) Inventor: **Umeda, Akira, c/o Intellectual
Property Div.
K.K. Toshiba, 1-1 Shibaura 1-chome
Minato-ku, Tokyo 105(JP)**

(74) Representative: **Henkel, Feiler, Hänzel &
Partner
Möhlstrasse 37
W-8000 München 80(DE)**

(54) **Interrupt controller for expansion slots.**

(57) An interrupt request selector (4) is controlled by a CPU (1) and determines whether an interrupt request signal supplied from independent interrupt request lines of a plurality of expansion slots (7) is a common interrupt request signal or an independent interrupt request signal in units of expansion units. The interrupt request selector connects an independent interrupt request line to a first programmable controller (5) or a second programmable controller (6). In this invention, independent interrupt request lines can be assigned to the expansion slots while keeping the compatibility with the expansion slots of an existing apparatus.

F I G. 1

The present invention relates to an information processing apparatus capable of assigning independent interrupt request lines in units of expansion slots while keeping compatibility of the expansion slots with an existing information processing apparatus and the like.

In an information processing apparatus and the like, an expansion card is conventionally used as one of the expansion means to expand the function. In a conventional interrupt control apparatus, an expansion card is inserted into one of expansion slots serving as connectors. Pins of the same numbers of all the expansion slots are connected in parallel to each other by various types of signal lines. The expansion slots are connected also in parallel to a programmable interrupt controller. Interrupt request lines are also connected between the expansion slots to be parallel to each other. The interrupt controller is connected to a CPU by an interrupt request line. In such a conventional apparatus of this type, the same result is obtained even if the expansion card is inserted in any one of the plurality of expansion slots.

Conventionally, however, the signal lines of the respective pins of the expansion slots cannot be changed as the compatibility of the expansion cards between existing data processing apparatuses must be kept. The number of signal lines is also limited. As a result, when there are many expansion slots, the number of the interrupt request lines becomes smaller than that of the expansion slots. Even when the number of expansion slots is small, if the interrupt request lines within the apparatus main body serve also as the interrupt request lines of the expansion slots, the number of interrupt request lines that can be actually used by the expansion slots becomes small. For this reason, when separate interrupt request lines are to be assigned independently in units of expansion slots, the interrupt request lines become insufficient, resulting in a problem. On the other hand, when the interrupt request lines are assigned completely separately in units of expansion slots, the compatibility of the software for processing the content of an expansion card in the existing apparatus is lost, as the interrupt request lines of the respective expansion slots have different specifications with respect to the expansion slots of the existing apparatus.

It is an object of the present invention to provide an information processing apparatus capable of assigning independent interrupt request lines to expansion slots while keeping the compatibility with the expansion slots of an existing apparatus.

In order to solve the problems described above, the present invention comprises a plurality of first control means for processing information and generating a first output in accordance with the processed information, first output means for commonly generating a second output in accordance with a content of the first output from a predetermined number of the plurality of first control means, second output means for selecting either one of an interrupt common to all the expansion slots and an independent interrupt in units of expansion slots, and generating a third output in units of the first control means in accordance with the first output from the first control means excluding the predetermined number of the first control means, and second control means for receiving the second and third outputs and generating an information processing instruction to the first control means.

In the present invention, the interrupt request selector (portion of second output means) that decodes and executes an instruction in accordance with the program is controlled by a CPU (second control means) and determines whether an interrupt request signal supplied from independent interrupt request lines of a plurality of expansion slots (first control means) is a common interrupt request signal or an independent interrupt request signal in units of expansion units. The interrupt request selector connects an independent interrupt request line to a first programmable controller (first output means) or a second programmable controller (portion of second control means).

Furthermore, in order to solve the problems described above, the present invention comprises a plurality of first control means for processing information and generating a first output in accordance with the processed information, output means for selecting either one of an interrupt common to all the expansion slots and an independent interrupt in units of expansion slots, commonly generating a second output in accordance with a content of the first output from a predetermined number of the plurality of first control means and generating a third output in units of the first control means in accordance with the first output from the first control means excluding the predetermined number of the first control means, and second control means for receiving the second and third outputs and generating an information processing instruction to the first control means.

Furthermore, in order to solve the problems described above, the present invention comprises a plurality of common interrupt request means commonly connected to a plurality of expansion slots, interrupt request means in units of expansion slots separately connected to the expansion slots, and control means, connected to the plurality of common interrupt request means and to the interrupt request means in units of the expansion slots, for discriminating a common interrupt request and an interrupt request in units of expansion slots in accordance with a designation from a central processing unit, and interrupting the central processing unit.

This invention can be more fully understood from the following detailed description when taken in conjunction with the accompanying drawings, in which:

Fig. 1 is a block diagram showing the configuration of an embodiment of the information processing apparatus according to the present invention; and

Fig. 2 is a circuit diagram showing the configuration of the interrupt request selector shown in Fig. 1.

A preferred embodiment of the information processing apparatus according to the present invention will be described with reference to the accompanying drawings.

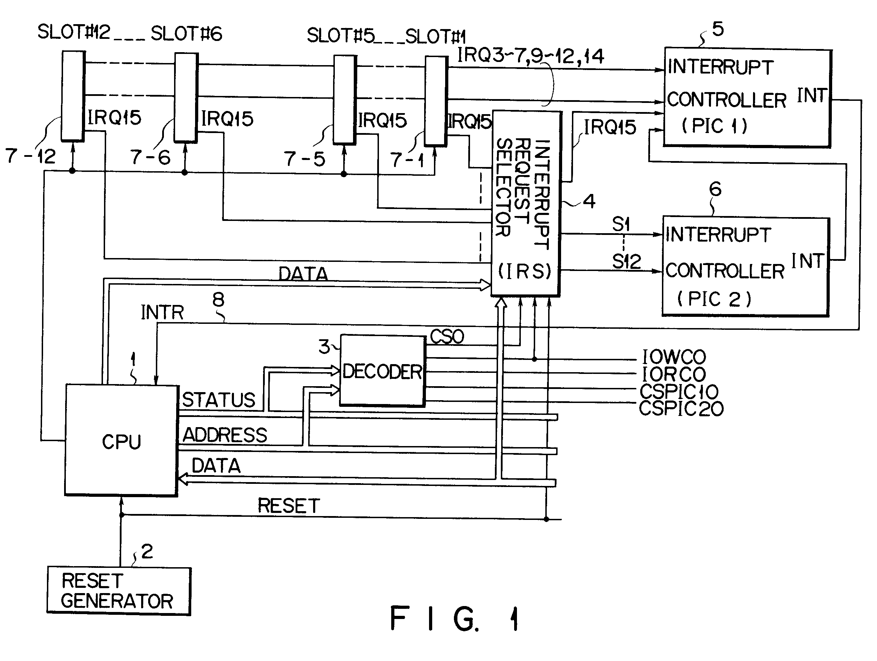

Fig. 1 is a block diagram showing an embodiment of the information processing apparatus of the present invention. In this embodiment, an interrupt request selector (IRS) 4 and a programmable interrupt controller (PIC2) 6 are newly provided. Interrupt request lines IRQ 15 assigned to pins of a specific number of a plurality of expansion slots 7-1 to 7-12 are connected to the interrupt request selector 4 as the independent interrupt request lines in units of expansion slots. The twelve interrupt request lines IRQ3 to IRQ7, IRQ9 to IRQ12, and IRQ14 are commonly connected to all the expansion slots 7-1 to 7-12 to be parallel to each other and also connected in parallel to the programmable interrupt controller (PIC1) 5. In this embodiment, the twelve signal lines IRQ3 to IRQ7, IRQ9 to IRQ12, and IRQ14 are commonly connected to be identical in number to the expansion slots. In practice, these twelve signal lines are also used to send interrupt requests of, e.g., the FDC, the HDC, the KBC, and the timer of the apparatus main body. The expansion slots and the apparatus main body cannot be uniquely separated for the sake of maintaining the compatibility with the interrupt request lines of the conventional apparatus. The interrupt controller 5 is connected to the interrupt request selector 4 by an interrupt request line IRQ15. The interrupt controller 6 is connected to the interrupt request selector 4 by signal lines S1 to S12 corresponding to the expansion slots 7-1 to 7-12. An interrupt output INT from the interrupt controller 6 is connected to the interrupt controller 5. The interrupt request selector 4 selects either an interrupt common to all the expansion slots or an independent interrupt in units of expansion slots, as will be described later. The interrupt controller 6 processes interrupt requests specific to the respective expansion slots, i.e., to the respective expansion cards. The interrupt request selector 4 and the interrupt controllers 5 and 6 constitute a control means. The interrupt controller 5 is connected to the CPU 1 by an interrupt request line (INTR) 8. The CPU 1 is also connected to a reset generator 2, a decoder 3, and so on. Although an information processing apparatus needs a memory, an I/O unit, and so on in addition to the CPU 1, the programmable interrupt controllers 5 and 6, and so on, they are omitted in Fig. 1.

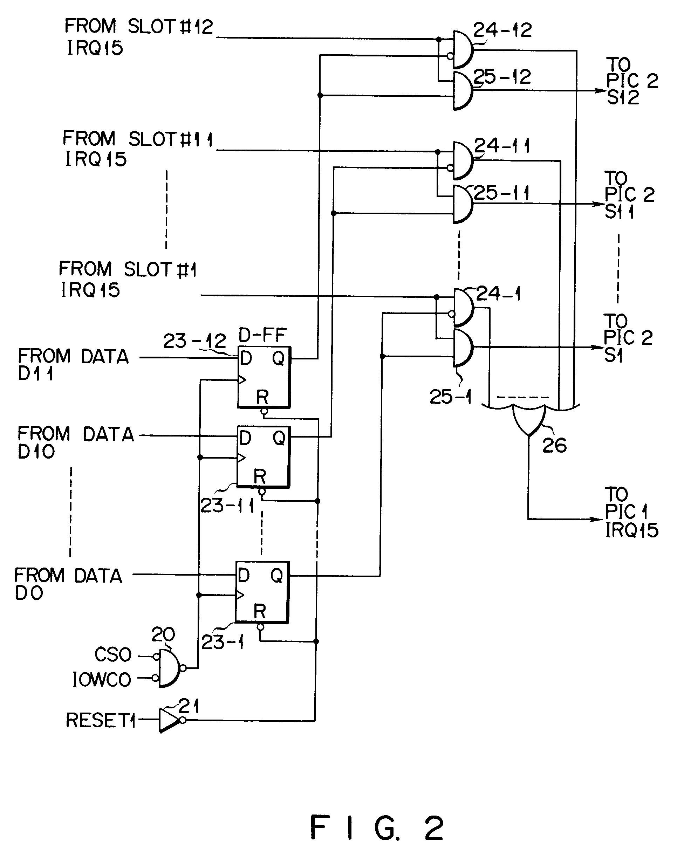

Fig. 2 is a circuit diagram showing the configuration of the interrupt request selector (IRS) 4 of Fig. 1. An OR gate 20 receives a chip select signal CSO and an I/O write command IOWCO. The output terminal of the OR gate 20 is connected to D type flip-flops 23-1 to 23-12. A reset signal RESET1 is connected to reset terminals R of the D type flip-flops 23-1 to 23-12 through an inverter 21. The D terminal of each of the D type flip-flops 23-1 to 23-12 receives corresponding one of data D0 to D11, and the output terminal Q thereof is connected to one input terminal of both of corresponding one of AND circuits 24-1 to 24-12 and corresponding one of AND circuits 25-1 to 25-12. The other input terminal of each of the AND circuits 24-1 to 24-12 is connected to the interrupt request line IRQ15 of the corresponding one of the expansion slots 7-1 to 7-12. The other input terminal of each of the AND circuits 25-1 to 25-12 is connected to the other input terminal of corresponding one of the AND circuits 24-1 to 24-12. Outputs from the AND circuits 25-1 to 25-12 are supplied to the programmable interrupt controller 6. The output terminals of the AND circuits 24-1 to 24-12 are connected to the input terminal of an OR gate 26, and the output terminal of the OR gate 26 is connected to the programmable interrupt controller 5.

The operation of the information processing apparatus of the present invention will be described in detail with reference to Figs. 1 and 2.

The initializing operation will be descried first. Upon initialization, the reset signal RESET1 is set at "1" by the reset generator 2, and all the outputs Q of the D type flip-flops 23-1 to 23-12 in Fig. 2 become "0". As a result, the interrupt request lines IRQ15 of the respective expansion slots are connected to the OR gate 26 through the AND circuits 24, and the apparatus is set to obtain a logic sum of the requests from all the expansion slots 7-1 to 7-12. When an expansion card is inserted in an expansion slot, the programmable interrupt controller 5 interrupts the CPU 1 via the interrupt request line (INTR) 8 in accordance with the content of the expansion card. The CPU 1 sends a status signal for generating a timing signal and an address signal for designating an address to a decoder 3 so that the decoder 3 generates an I/O write command (IOWCO) which instructs an interrupt request selector 4 etc. to write I/O data, an I/O read command (IORCO) which instructs an interrupt request selector 4 etc. to read I/O data, a chip select command (CSO) which instructs to select a desired chip among a plurality of chips, and a programmable interrupt controller command (CSPIC10) that are necessary. The respective commands are sent to the apparatus main body together with external data and are executed. A predetermined expansion function is executed in this manner. The same interrupt request signal appears on the same interrupt request line even if the same expansion card is inserted in any one of the expansion slots.

The ordinary operation will now be described. An interrupt request signal from the interrupt request line IRQ15 of the expansion slots 7-1 to 7-12 is input to the interrupt request selector 4. The interrupt request selector 4 selects, based on an instruction from the CPU 1, whether to obtain a logic sum of the given interrupt request signal with another interrupt request signals and to input the sum to the programmable interrupt controller 5, or to input the given interrupt request signal to the programmable controller 6 as an independent interrupt request signal, in units of interrupt request signals from the respective expansion slots. If it selects to obtain the logic sum, other interrupt request signals are also subjected to logic sum operation. In the case of an independent interrupt request signal in units of expansion slots, the interrupt controller 6 interrupts the CPU 1 through the interrupt controller 5 and the interrupt request line 8.

Assume that the decoder 3 outputs both I/O write command IOWCO and chip select signal CSO at "0" based on the status and address signals from the CPU 1 and thereafter the I/O write command IOWCO returns to "1". In this case, the data D output from the CPU 1 is fetched by a D type flip-flop 23. For example, when the data DO is "1", the output from the D type flip-flop 23-1 becomes "1", and the interrupt request signal from the expansion slot 7-1 is supplied to the terminal S1 of the interrupt controller 6. Table 1 shows the relationship between input data D and outputs from the interrupt controller.

Table 1

| Setting<br>Data | 0 | | 1 | |
|---|---|---|---|---|
| D11 | PTC1 | IRQ15 | PIC2 | S12 |
| D10 | | | PIC2 | S11 |
| . | | | | |
| . | | | | |
| . | | | | |
| . | | | | |
| D0 | PIC1 | IRQ15 | PIC2 | S1 |

The D type flip-flops 23-1 to 23-12 corresponding to the expansion slots 7-1 to 7-12 are set by the data D from the CPU 1, and the interrupt request lines IRQ15 can be connected to the interrupt controller 5 or 6 through the OR gate 26 in units of expansion slots. When the logic sum is to be obtained, the compatibility with the software for the expansion cards of the conventional apparatus is maintained.

In Fig. 1, the interrupt controller 5 is a master controller and the interrupt controller 6 is a slave controller. However, the interrupt controllers 5 and 6 can be separately connected to the CPU 1. In Fig. 2, the twelve D type flip-flops 23-1 to 23-12 are set at once. Therefore, in order to change the setting, the setting of all the flip-flops 23-1 to 23-12 must be changed. However, if a variable is prepared on a memory (not shown) and the content to be set in the D type flip-flops 23 is stored in the memory in advance, the setting can be changed by only referring to the content of the corresponding portion of the memory to be changed in case setting is to be changed later on. It is also possible to change the address designation so that only a single D type flip-flop may be changed with respect to a single address. In this case, twelve addresses are necessary. Furthermore, it is possible to read out the content of the D type flip-flops by instructions from the CPU.

As has been described above, according to the present invention, independent interrupt request lines can be newly provided in units of expansion slots while maintaining the compatibility of the expansion slots against an existing information processing apparatus and the like. As a result, the number of interrupt request lines can be increased, and the respective expansion slots can be provided with specific expansion functions.

**Claims**

1. An information processing apparatus characterized by comprising:

a plurality of first control means (7) for processing information and generating a first output in accordance with the processed information;

first output means (5) for commonly generating a second output in accordance with a content of the first output from a predetermined number of said plurality of first control means (7);

second output means (4, 6) for selecting either one of an interrupt common to all the expansion slots and an independent interrupt in units of expansion slots, and generating a third output in units of said first control means (7) in accordance with the first output from said first control means (7) excluding said predetermined number of said first control means (7); and

second control means (1) for receiving the second and third outputs and generating an information processing instruction to said first control means (7).

2. An apparatus according to claim 1, characterized in that said first control means (7) comprise expansion slots (7) and are commonly connected to common interrupt request means (IRQ3 to IRQ7, IRQ9 to IRQ12, IRQ14).

3. An apparatus according to claim 1, characterized in that said first output means (5) comprises a first interrupt controller (5) commonly connected to said plurality of first control means (7).

4. An apparatus according to claim 1, characterized in that said second output means (4, 6) comprises an interrupt request selector (4) separately connected to said plurality of first control means (7), and a second interrupt controller (6) connected in parallel to said interrupt request selector (4).

5. An apparatus according to claim 1, characterized in that said second control means (1) comprises a central processing unit (1).

6. An information processing apparatus characterized by comprising:

a plurality of first control means (7) for processing information and generating a first output in accordance with the processed information;

output means (4, 5, 6) for selecting either one of an interrupt common to all the expansion slots and an independent interrupt in units of expansion slots, commonly generating a second output in accordance with a content of the first output from a predetermined number of said plurality of first control means (7), and generating a third output in units of said first control means (7) in accordance with the first output from said first control means (7) excluding said predetermined number of said first control means (7); and

second control means (1) for receiving the second and third outputs and generating an information processing instruction to said first control means (7).

7. An information processing apparatus characterized by comprising:

a plurality of common interrupt request means (IRQ3 to IRQ7, IRQ9 to IRQ12, IRQ14) commonly connected to a plurality of expansion slots (7);

interrupt request means (IRQ15) in units of expansion slots separately connected to said expansion slots (7); and

control means (4, 5, 6), connected to said plurality of common interrupt request means (IRQ3 to IRQ7, IRQ9 to IRQ12, IRQ14) and to said interrupt request means (IRQ15) in units of said expansion slots, for discriminating a common interrupt request and an interrupt request in units of expansion slots in accordance with a designation from a central processing unit (1), and interrupting said central processing unit (1).

8. An apparatus according to claim 7, characterized in that said control means comprises a first interrupt controller (5) commonly connected to said plurality of expansion slots (7), an interrupt request selector (4) independently connected to said plurality of expansion slots (7), and a second interrupt controller (6) connected in parallel to said interrupt request selector (4).

F I G. 1

F I G. 2

7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-4 849 931 (ISHII ET AL.)<br>* column 1, line 61 - column 2, line 62 *<br>* column 6, line 10 - line 43; figures 1-3 *<br>--- | 1 | G06F13/24 |
| P,A | EP-A-0 418 658 (KABUSHIKI KAISHA TOSHIBA)<br>* column 5, line 34 - column 6, line 51; figure 2 *<br>--- | 1 | |
| A | IBM TECHNICAL DISCLOSURE BULLETIN.<br>vol. 29, no. 9, February 1987, NEW YORK US<br>pages 3871 - 3872; 'INTERRUPT CONTROLLER DIAGNOSTIC WRAP ARRANGEMENT'<br>* the whole document *<br>--- | 1 | |
| A | INTEL MICROSYSTEM COMPONENTS HANDBOOK 1984<br>1984,<br>pages 2120 - 2137; '8259A / 8259A-2 / 8259A-8 PROGRAMMABLE INTERRUPT CONTROLLER'<br>* page 2133, column 2, line 7 - line 31; figure 11 *<br>--- | 1 | |
| A | IBM TECHNICAL DISCLOSURE BULLETIN.<br>vol. 24, no. 5, October 1981, NEW YORK US<br>pages 2303 - 2306;<br>HIGDON ET AL.: 'PROGRAMMABLE, EXPANDABLE INTERRUPT CONTROLLER'<br>* page 2305, line 30 - page 2306, line 16; figure 2 *<br>----- | 1 | TECHNICAL FIELDS SEARCHED (Int. Cl.5 )<br><br>G06F |

The present search report has been drawn up for all claims

| Place of search | Date of completion of the search | Examiner |
|---|---|---|
| THE HAGUE | 17 MARCH 1992 | NYGREN P.P. |

EPO FORM 1503 03.82 (P0401)